# EUROPEAN PATENT APPLICATION

(11) **EP 3 364 383 A1**
(43) Date of publication of application: **22.08.2018**
(21) Application number: 18152258.2
(22) Date of filing: 18.01.2018
(51) Int. Cl.: G07G 1/00

(54) **POINT-OF-SALE TERMINAL**

(30) Priority: 20.02.2017 JP 2017029257
(71) Applicant: Toshiba TEC Kabushiki Kaisha, Tokyo 141-8562 (JP)
(72) Inventor: WATANABE, Osamu, Shinagawa-ku,, Tokyo 141-8562 (JP)
(74) Representative: Takeuchi, Maya

(57) **Abstract**

A point-of-sale terminal includes a plurality of module units, and a control unit configured to communicate with the module units to receive inputs for point-of-sale processing therefrom and transmit outputs of the point-of-sale processing thereto. Each of the module units includes substantially box-shaped casing, a peripheral device of the control unit disposed inside the substantially box-shaped casing, and an operational interface of the peripheral device, on a front wall of the substantially box-shaped casing. The module units have the same width and the same depth.

## Description

### FIELD

Embodiments described herein relate generally to a point-of-sale terminal.

### BACKGROUND

In the related art, a sales data processing device, such as a POS (point-of-sale) terminal, is installed at stores of large retailers. Shop assistants carry out sales data processing, such as registration and payment of commodities, using this sales data processing device. Additionally, recently, there is a system called self-service or semi-self-service checkout in which customers themselves carry out registration and payment of commodities using the sales data processing device.

Meanwhile, the sales data processing device is provided with peripheral devices such as a printer for printing a receipt or a card reader for reading information from a card medium. However, with the sales data processing device according to the related art, it is common to integrate these peripheral devices with the main body of the sale data processing device. Therefore, it is not easy to remove or add a specified peripheral device. Also, with the sales data processing device according to the related art, it is common to have the peripheral devices fixed to the main body of the sales data processing device. Therefore, it is not easy to change the layout, leading to a lack of convenience.

### SUMMARY OF INVENTION

To solve the above-cited problems, there is provided a point-of-sale terminal comprising:
one or more module units; and
a control unit configured to communicate with the module units to receive inputs for point-of-sale processing therefrom and transmit outputs of the point-of-sale processing thereto,
wherein each of the module units includes
   a substantially box-shaped casing,
   a peripheral device of the control unit disposed inside the substantially box-shaped casing, and
   an operational interface of the peripheral device, on a front wall of the substantially box-shaped casing, and
wherein the module units have the same width and the same depth.

In an exemplary embodiment each of the module units preferably may have a height that is an integer multiple of a predetermined reference length.

In the embodiment the predetermined reference length preferably may be set based on one of the module units having the smallest height.

In the embodiment the integer multiple preferably may be 1, 2, or 3.

In the embodiment each of the module units preferably may have a connection interface at a rear wall of the substantially box-shaped casing.

In the embodiment one of the module units preferably may include a scanner and the operational interface is a window in front of which a target to be scanned is positioned.

In the embodiment one of the module units preferably may include a printer and the operational interface is a paper discharge port of the printer.

In the embodiment one of the module units preferably may include a card reader-writer and the operational interface is an insertion port into which a card to be processed by the card reader-write is inserted.

In the embodiment one of the module units preferably may include an object recognition device and the operational interface is a window in front of which a target to be imaged for object recognition is positioned.

In another exemplary embodiment there is also provided a point-of-sale terminal comprising:
a first module unit having a substantially box-shaped casing in which a scanner is housed;
a second module unit having a substantially box-shaped casing in which a printer is housed;
a third module unit having a substantially box-shaped casing in which a card reader is housed; and
a control unit configured to communicate with the first, second, and third module units to receive inputs for point-of-sale processing therefrom and transmit outputs of the point-of-sale processing thereto,
wherein the module units have the same width and the same depth.

In the embodiment each of the module units preferably may have a height that is an integer multiple of a predetermined reference length.

In the embodiment the predetermined reference length preferably may be set based on one of the module units having the smallest height.

In the embodiment the integer multiple preferably may be 1, 2, or 3.

In the embodiment each of the first, second, and third module units preferably may have an operational interface at a front wall of the substantially box-shaped casing and a connection interface at a rear wall of the substantially box-shaped casing.

In yet another exemplary embodiment there is also provided a point-of-sale terminal comprising:
a first module unit having a substantially box-shaped casing in which a scanner is housed;
a second module unit having a substantially box-shaped casing in which a printer is housed;
a third module unit having a substantially box-shaped casing in which a card reader is housed; and
a control unit configured to communicate with the first, second, and third module units to receive inputs for point-of-sale processing therefrom and transmit outputs of the point-of-sale processing thereto,
wherein each of the first, second, and third module units has an operational interface at a front wall of the substantially box-shaped casing and a connection interface at a rear wall of the substantially box-shaped casing.

In the embodiment the module units preferably may have the same width and the same depth.

In the embodiment each of the module units preferably may have a height that is an integer multiple of a predetermined reference length.

In the embodiment the predetermined reference length preferably may be set based on one of the module units having the smallest height.

In the embodiment the integer multiple preferably may be 1, 2, or 3.

In the embodiment each of the first, second, and third module units preferably may have an operational interface at a front wall of the substantially box-shaped casing and a connection interface at a rear wall of the substantially box-shaped casing.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is an outer perspective view showing an example of a sales data processing device.
FIG. 2 is an outer perspective view showing another example of the sales data processing device.
FIG. 3 is an outer perspective view showing another example of sales data processing device.
FIG. 4 is a block diagram showing an example of the hardware configuration of the sales data processing device.
FIG. 5 is an outer perspective view showing another example of the sales data processing device.

### DETAILED DESCRIPTION

In general, according to one embodiment, a point-of-sale terminal includes a plurality of module units, and a control unit configured to communicate with the module units to receive inputs for point-of-sale processing therefrom and transmit outputs of the point-of-sale processing thereto. Each of the module units includes substantially box-shaped casing, a peripheral device of the control unit disposed inside the substantially box-shaped casing, and an operational interface of the peripheral device, on a front wall of the substantially box-shaped casing. The module units have the same width and the same depth.

Hereinafter, a point-of-sale terminal according to an embodiment will be described with reference to the drawings.

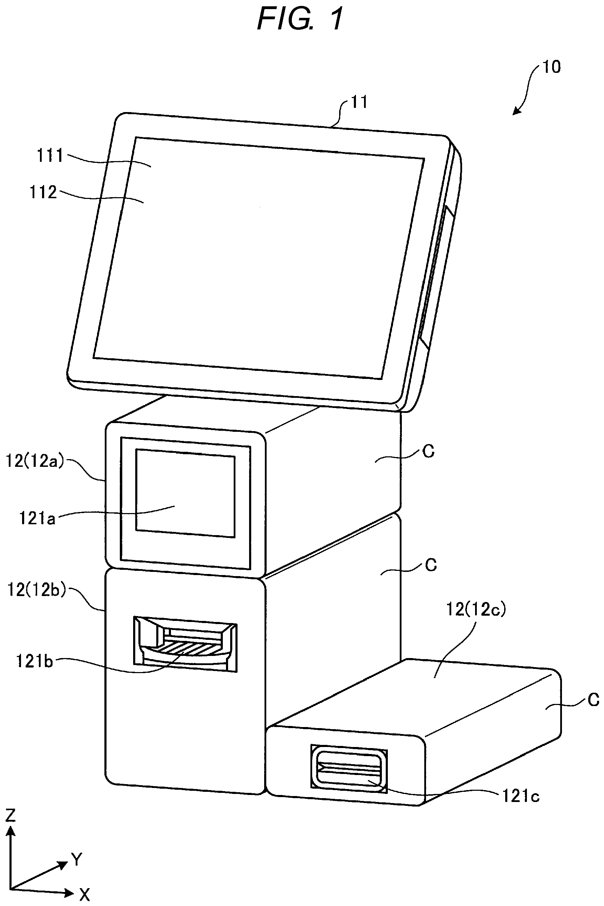

FIG. 1 is an outer perspective view showing a sales data processing device 10, which is described herein as one example of the point-of-sale terminal according to the embodiment. As shown in FIG. 1, the sales data processing device 10 includes a display unit 11 and a plurality of module units 12.

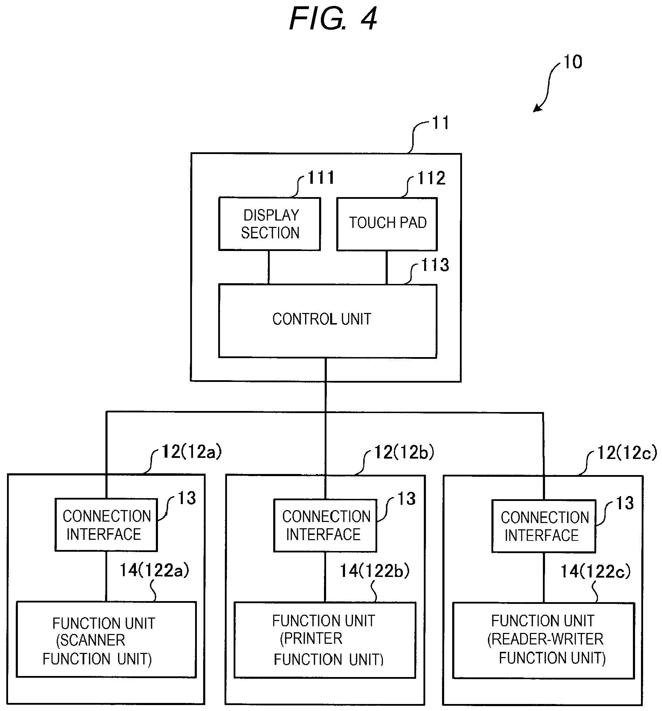

The display unit 11 has a display section 111 such as an LCD (liquid crystal display), and a touch pad 112 or the like. The display screen of the display section 111 displays various kinds of information related to sales data processing on the front side of display unit 11. The touch pad 112 is provided on the display screen of the display section 111 and detects a position of operation by a user's finger on the display screen. The display section 111 and the touch pad 112 are configured of, for example, an electrostatic capacitance-type touch panel. The display unit 11 includes a control unit 113 (see FIG. 4) which performs overall control on the operation of the sales data processing device 10.

On the back side of the display unit 11, a stand (not illustrated) for supporting the display unit 11 is provided. The display unit 11 is attached to a module unit 12 via the stand. It is preferable that this stand has a tilt mechanism, swivel mechanism, pivot mechanism or the like that can adjust the angle of arrangement of the display unit 11.

Each of the module units 12 has a substantially box-shaped casing C. The casing C has a functional unit inside which functions as a peripheral device. The casing C also has an operational interface corresponding to the functional unit, on a wall surface (e.g., front wall) in the front direction.

A module unit 12a includes a scanner which reads a code symbol (for example, a barcode) attached to a commodity. The module unit 12a has a window 121a as a structure corresponding to the scanner, on the front wall of the casing C. The scanner directs light from a light source to the outside of the window 121a to optically scan a code symbol of a commodity held over the window 121a, determines a commodity code for identifying the commodity from the optically scanned code symbol, and outputs the commodity code to the control unit 113.

The module unit 12a may include an object recognition device in place of the scanner. The object recognition device includes an image acquisition element such as a CCD sensor or CMOS sensor, extracts a feature value indicating a feature of the commodity from the acquired image data of the commodity held over the window 121a, and recognizes the type of the commodity based on the feature value.

A module unit 12b is a printer device which prints on a receipt or the like. The module unit 12b has a paper discharge port 121b as a structure corresponding to the printer device, on the front wall of the casing C. The module unit 12b also has, inside the casing C, a printer function unit 122b (see FIG. 4), such as a printer engine of a thermal printer or the like, a controller which controls the printer engine, and a housing unit for housing papers. The controller causes the printer engine to operate under the control of the control unit 113 and thus causes a receipt with a transaction statement or the like printed thereon to be outputted from the paper discharge port 121b. The receipt can be supplied from the back side, the lateral side or the like of the casing C.

A module unit 12c is a card reader-writer which reads information from and writes information onto a card medium. The module unit 12c has an insertion port 121c as a structure corresponding to the card reader-writer, on the front wall of the casing C. The module unit 12c also has, inside the casing C, a reader-writer function unit 122c (see FIG. 4), such as a reader-writer unit which reads data from and writes data onto a card medium. The reader-writer unit reads data from and writes data onto a card medium such as a magnetic card or IC card inserted in the insertion port 121c, under the control of the control unit 113.

The dimensions in a direction of height (Z direction in the illustration), a direction of width (X direction in the illustration) and a direction of depth (Y direction in the illustration) of the casing C of the module unit 12 are formed according to a predetermined standard.

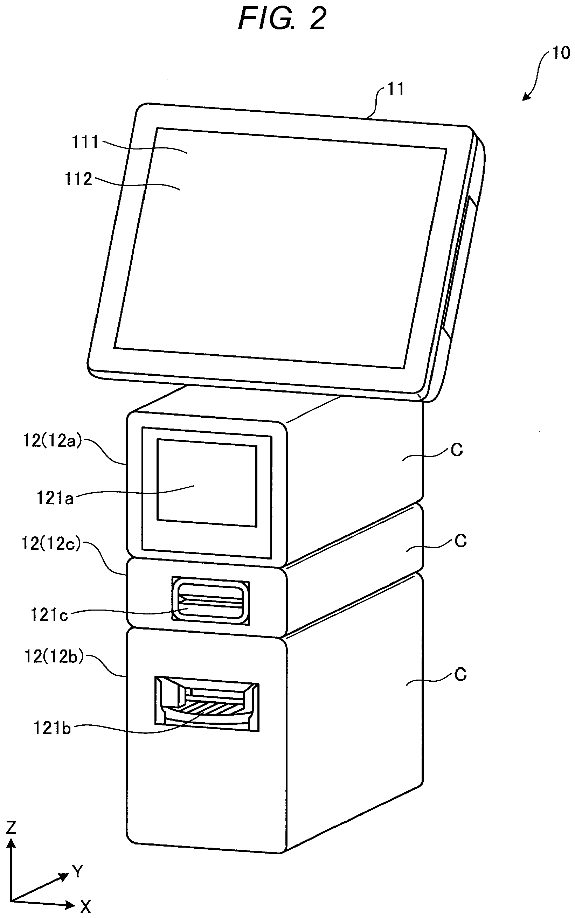

Specifically, the casings C of the respective module units 12 have the same dimension in the direction of width. By thus providing the same dimension in the direction of width for all of the module units 12, it is possible to easily align the module units 12 to the same length in the direction of width and therefore it is possible to improve the overall alignment or the sense of fitting when the module units 12 are stacked in the direction of height (see FIG. 2) or juxtaposed with each other in the direction of width.

Also, the casings C of the respective module units 12 have the same dimension in the direction of depth. By thus providing the same dimension in the direction of depth for all of the module units 12, it is possible to easily align the module units 12 to the same length in the direction of depth and therefore it is possible to improve the overall alignment or the sense of fitting when the module units 12 are stacked in the direction of height (see FIG. 2) or juxtaposed with each other in the direction of width.

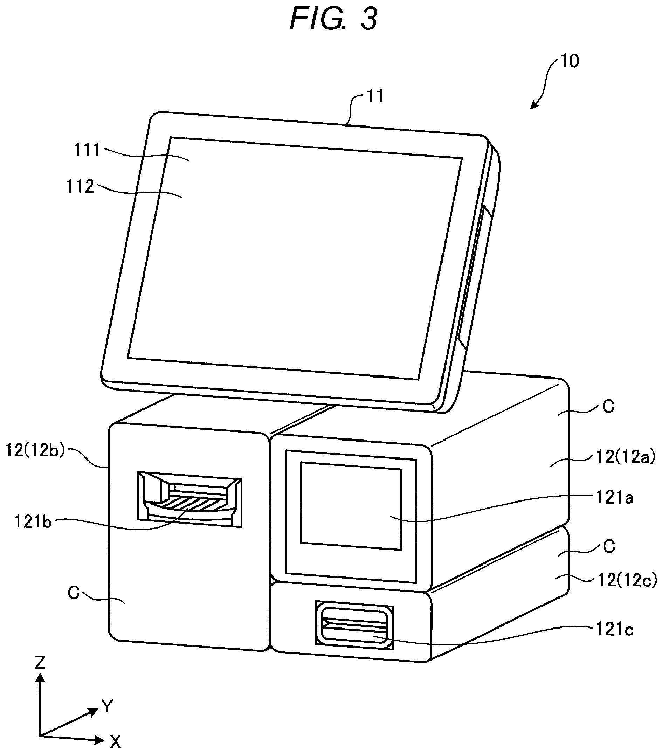

Moreover, the casings C of the respective module units 12 are formed in such a way that the dimension in the direction of height is an integer multiple of a predetermined reference length. FIG. 1 shows an example in which the dimension in the direction of height of the module unit 12c is formed to be the reference length multiplied by 1, that is, equal to the reference length. In this example, the dimension in the direction of height of the module unit 12a is formed to be the reference length multiplied by 2, and the dimension in the direction of height of the module unit 12b is formed to be the reference length multiplied by 3. By thus forming the dimension in the direction of height to be an integer multiple of the reference length, it is possible to easily align the top surfaces to the same level and therefore it is possible to improve the overall alignment or the sense of fitting when the module units 12 are stacked in multiple columns (see FIG. 3).

Although the reference length is not particularly limited, it is preferable that the reference length is set based on the size of the module unit 12 with the smallest length in the direction of height. Also, while the dimension in the direction of height, that is, the multiplier of the reference length, can be arbitrarily selected, it is preferable that the dimension in the direction of height is selected according to the size of the functional unit built therein. Also, the dimensions in the direction of width and in the direction of depth of the casing C may be decided based on a reference length.

In the sales data processing device 10 described above, each of the module units 12 has an independent module configuration. Therefore, the module units 12 can be stacked on or juxtaposed with each other. For example, FIG. 1 shows an example in which the module units 12a to 12c are arranged in an L-shape. Also, the position of arrangement and the order of arrangement of the module units 12 are not limited to the example shown in FIG. 1. For example, other layouts as shown in FIGS. 2 and 3 may be employed.

FIGS. 2 and 3 are outer perspective views showing other examples of the layout of the sales data processing device 10. FIG. 2 shows an example in which the module units 12 are stacked in one column. FIG. 3 shows an example in which the module units 12 are stacked in two columns in such a way as that the top surfaces of these units are the same level. With the arrangement as shown in FIG. 3, a broad top surface of the sales data processing device 10 can be secured and therefore the display unit 11 can be easily placed thereon.

In FIGS. 1 to 3, the display unit 11 is installed on the uppermost surface of the module units 12. However, the position of installation of the display unit 11 is not limited to this example. For example, the display unit 11 may be installed on table or the like where the modules units 12 are placed. Also, with a removable fixing member such as a screw, the module units 12 may or may not be fixed to each other, and the display unit 11 and the module units 12 may or may not be fixed to each other.

While the dimensions of the display unit 11 are not particularly limited, the dimension in the direction of long side or the direction of short side may be an integer multiple of the dimension in the direction of width of the module unit 12. For example, in FIG. 3, the dimension in the direction of long side of the display unit 11 is double the dimension in the direction of width of the module unit 12. Therefore, the dimension of the display unit 11 is equal to the total length in the direction of width of the module units 12 arranged in two columns. By thus forming the dimension of the display unit 11 to be an integer multiple of the dimension in the direction of width of the module unit 12, it is possible to improve the overall alignment or the sense of fitting when the display unit 11 is installed on the module units 12.

Next, the hardware configuration of the sales data processing device 10 will be described with reference to FIG. 4. FIG. 4 is a block diagram showing an example of the hardware configuration of the sales data processing device 10.

As shown in FIG. 4, the display unit 11 includes the display section 111, the touch pad 112, and the control unit 113.

The control unit 113 includes a CPU (central processing unit), a ROM (read only memory), and a RAM (random access memory) or the like. The control unit 113 also has a storage unit which stores a program such as an OS (operating system) and various kinds of setting information. The control unit 113 is connected to the display section 111 and the touch pad 112, carries out display control on the display section 111 and accepts an operation input via the touch pad 112.

The control unit 113 also has a connection interface for removably connecting the module units 12, and a network interface or the like for connecting to an external network (neither of the interfaces illustrated). The control unit 113 inputs and outputs various data via the connected module units 12.

Meanwhile, each of the module units 12 has a connection interface (I/F) 13 that allows the control unit 113, and the functional unit 14 to be connected in a removable manner. Here, the standard and form of the connection interface 13 are not particularly limited. A general-purpose connection interface 13 may be used. The position where the connection interface 13 is provided is not particularly limited, either. However, in view of operability, it is preferable that the connection interface 13 is provided at a position other than the front wall of the module unit 12.

For example, each of the module units 12 may have the connection interface 13 for wired connection on the back side of the casing C. In the case of this configuration, each of the module units 12 is connected to the control unit 113 via a cable connected to the connection interface 13.

Also, for example, each of the module units 12 may have the connection interface 13 that is connectable in a daisy-chain method, on each of the lateral side, the top side, and the bottom side of the casing C. In this case, each of the module units 12 is connected to the control unit 113 in a linked manner via the connection interface 13. It is preferable that the position where the connection interfaces 13 are provided is a position between the neighboring module units 12 and where the connection interfaces 13 face each other. Also, the number of connection interfaces 13 provided on each surface of the casing C is not limited to one and may be a plurality. The connection interface 13 may have a connector that enables direct connection between the connection interfaces 13 without using a cable or the like.

Also, each of the module units 12 may have the connection interface 13 that can wirelessly connect to the inside of the casing C. In this case, each of the module units 12 is wirelessly connected to the control unit 113 via the connection interface 13. The standard of this wireless communication is not particularly limited and may be a short-range wireless communication standard such as WiFi or Bluetooth®. Also, each of the module units 12 may be configured to be wirelessly connected to the control unit 113 (display unit 11) via an access point, not illustrated.

The functional unit 14 is a function unit for causing the module unit 12 to function as a peripheral device of the sales data processing device 10. For example, the module unit 12a has a scanner device has as the scanner function unit 122a. The module unit 12b has a printer device as the printer function unit 122b. The module unit 12c has the reader-writer as the reader-writer function unit 122c.

The control unit 113 executes sales data processing such as sales registration and payment or the like of commodities by collaborating with each module unit 12 connected thereto. For example, based on a commodity code read by the module unit 12a, the control unit 113 specifies a commodity corresponding to the commodity code and registers this commodity as a sales target commodity. Also, the control unit 113 executes the payment of the registered commodity for one transaction. When the payment is completed, the control unit 113 causes the module unit 12b to print details of the registered commodity and output the printed details as a receipt. If the payment of a commodity is carried out via card settlement using a card medium, the control unit 113 executes the payment of the commodity based on card information read from the card medium by the module unit 12c.

As described above, the whole shape of the sales data processing device 10 according to this embodiment can be formed by stacking or juxtaposing the module units 12. Thus, in the sales data processing device 10, the layout of the module units 12 can be easily changed and therefore convenience with respect to layout change can be improved.

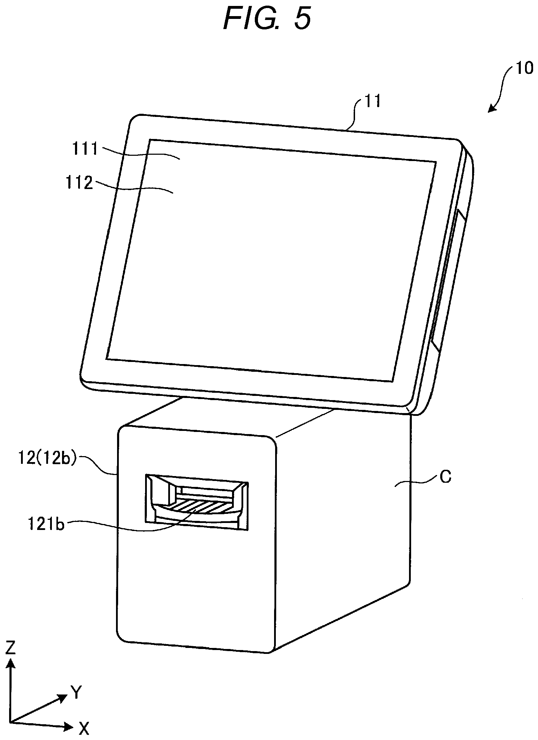

In the embodiment, the sales data processing device 10 has three module units 12 (12a to 12c). However, the number of module units 12 is not limited to this example. For example, one or two module units 12 may be eliminated from the configurations shown in FIGS. 1 to 3. FIG. 5 is an outer perspective view showing another example of the sales data processing device 10, in which the modules units 12a, 12c are eliminated from the configurations shown in FIGS. 1 to 3. Since a specific module unit 12 can be eliminated from or added to the sales data processing device 10 in this manner, convenience with respect to layout change can be improved.

Embodiments are described above. However, these embodiments are presented as examples and are not intended to limit the scope of the invention. These novel embodiments can be carried out in various other forms. Various omission, replacements, combinations and changes can be made without departing from the scope of the invention. The embodiments and modifications thereof are included in the scope of the invention and also included in the scope of the inventions described in the claims and equivalents thereof.

For example, though the display unit 11 has a different shape from the module unit 12 in the embodiments, this is not limiting and the display unit 11 may have a shape similar to that of the module unit 12. In this case, for example, if a display screen is provided on the front side of the casing C of the module unit 12, the module unit 12 can be similarly stacked on or juxtaposed with the other module units 12.

Also, while the control unit 113 in the embodiments is configured to be built in the display unit 11, this is not limiting and the control unit 113 may be built in one of the module units 12. The control unit 113 may also be housed in a casing similar to the casing C of the module unit 12. Thus, the control unit 113 can be similarly stacked on or juxtaposed with the other module units 12.

Moreover, though the casings C of the module units 12 in the embodiments have the same dimension in the direction of depth, this is not limiting and the respective module units 12 may have different dimensions in the direction of depth.

## Claims

1. A point-of-sale terminal comprising:
one or more module units; and
a control unit configured to communicate with the module units to receive inputs for point-of-sale processing therefrom and transmit outputs of the point-of-sale processing thereto,
wherein each of the module units includes
a substantially box-shaped casing,
a peripheral device of the control unit disposed inside the substantially box-shaped casing, and
an operational interface of the peripheral device, on a front wall of the substantially box-shaped casing, and
wherein the module units have the same width and the same depth.

2. The terminal according to claim 1, wherein each of the module units has a height that is an integer multiple of a predetermined reference length.

3. The terminal according to claim 2, wherein the predetermined reference length is set based on one of the module units having the smallest height.

4. The terminal according to claim 2, wherein the integer multiple is 1, 2, or 3.

5. The terminal according to any one of claims 1-4, wherein each of the module units has a connection interface at a rear wall of the substantially box-shaped casing.

6. The terminal according to any one of claims 1-5, wherein one of the module units includes a scanner and the operational interface is a window in front of which a target to be scanned is positioned.

7. The terminal according to any one of claims 1-6, wherein one of the module units includes a printer and the operational interface is a paper discharge port of the printer.

8. The terminal according to any one of claims 1-7, wherein one of the module units includes a card reader-writer and the operational interface is an insertion port into which a card to be processed by the card reader-write is inserted.

9. The terminal according to any one of claims 1-8, wherein one of the module units includes an object recognition device and the operational interface is a window in front of which a target to be imaged for object recognition is positioned.

10. A point-of-sale terminal comprising:
a first module unit having a substantially box-shaped casing in which a scanner is housed;
a second module unit having a substantially box-shaped casing in which a printer is housed;
a third module unit having a substantially box-shaped casing in which a card reader is housed; and
a control unit configured to communicate with the first, second, and third module units to receive inputs for point-of-sale processing therefrom and transmit outputs of the point-of-sale processing thereto,
wherein the module units have the same width and the same depth.

11. The terminal according to claim 10, wherein each of the module units has a height that is an integer multiple of a predetermined reference length.

12. The terminal according to claim 11, wherein the predetermined reference length is set based on one of the module units having the smallest height.

13. A point-of-sale terminal comprising:
a first module unit having a substantially box-shaped casing in which a scanner is housed;
a second module unit having a substantially box-shaped casing in which a printer is housed;
a third module unit having a substantially box-shaped casing in which a card reader is housed; and
a control unit configured to communicate with the first, second, and third module units to receive inputs for point-of-sale processing therefrom and transmit outputs of the point-of-sale processing thereto,
wherein each of the first, second, and third module units has an operational interface at a front wall of the substantially box-shaped casing and a connection interface at a rear wall of the substantially box-shaped casing.

14. The terminal according to claim 13, wherein the module units have the same width and the same depth.

15. The terminal according to claim 14, wherein each of the module units has a height that is an integer multiple of a predetermined reference length.
